# EUROPEAN PATENT SPECIFICATION

(11) **EP 2 445 254 B1**
(45) Date of publication and mention of the grant of the patent: **02.07.2014**
(21) Application number: 10188684.4
(22) Date of filing: 25.10.2010
(51) Int. Cl.: H04W 36/00

(54) **Method enabling seamless 3G inter-domain handover**
Verfahren zur Ermöglichung einer nahtlosen 3G-Übergabe zwischen Domänen
Procédé d'activation de transfert sans interruption entre domaines 3G

(43) Date of publication of application: 25.04.2012
(73) Proprietor: Deutsche Telekom AG, 53113 Bonn (DE)
(72) Inventor: Einsiedler, Hans, 13189 Berlin (DE); Aguiar, Rui L., 3800-351 Aveiro (PT); Moreno, Jose Ignacio, 28922 Alcorcon, Madrid (ES); Brito, Alexandre, 3700-745 Milheiros de Poiares (PT); Lopez, Gregorio, 28911 Leganes, Madrid (ES); Carranza, Galvez Ruben, 28910 Getafe (ES)
(74) Representative: Vossius & Partner

(56) References cited:
- WO-A1-00/08884
- WO-A1-2009/084864
- WO-A2-03/096594
- US-A1- 2009 207 808
- US-A1- 2010 260 147
- "Digital cellular telecommunications system (Phase 2+); Functions related to Mobile Station (MS) in idle mode and group receive mode (GSM 03.22 version 7.3.0 Release 1998); 10 - 14 January 2000 ETSI TS 100 930", ETSI STANDARDS, LIS, SOPHIA ANTIPOLIS CEDEX, FRANCE, no. V7.3.0, 1 December 1999 (1999-12-01), XP014018939, ISSN: 0000-0001

## Description

### Field of the invention

The present invention provides methods for seamless mobility across 3G networks on different domains. 3G to 3G seamless inter-domain handovers invention extents the implementation currently running in standardized 3G network nodes.

### Background of the Invention

The world does not stop moving and so do people more and more nowadays. Over the last few years, there has been an increasing roaming demand stimulated by the market globalization together with cheap, fast, and easy ways to travel abroad.

Nowadays, roaming agreements are not seen by telecom operators as an added value but as a must. It is common for roaming capabilities turn active automatically, when in presence of a Service Level Agreement (SLA), enabling inter-domain voice calls.

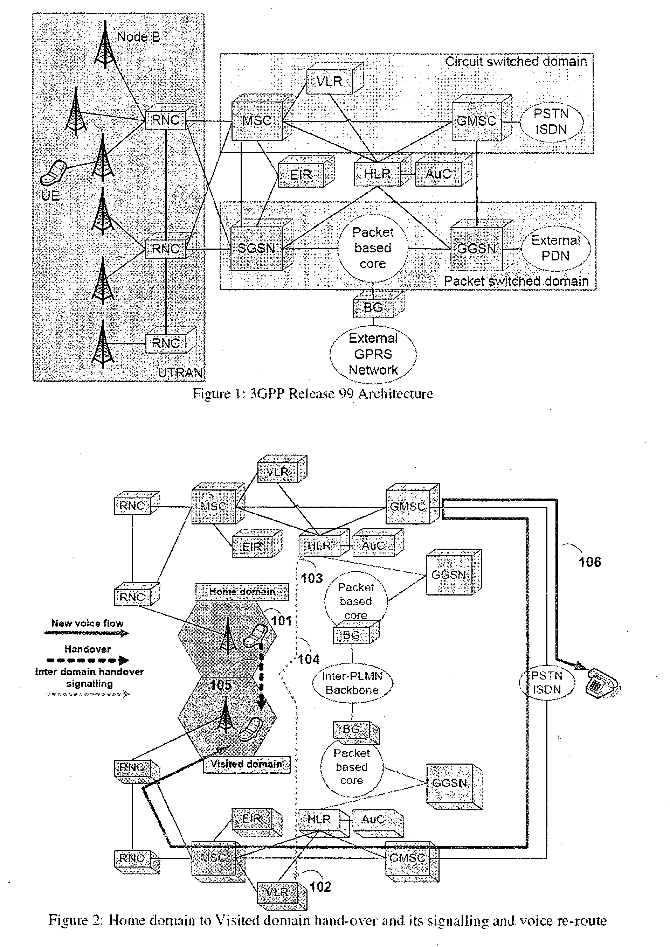

The current methods for 3GPP Release 99 architecture ([1], [2]) shown in Fig. 1 features mobile terminal (MT) registration on a Visited domain through roaming agreements. The Radio Network Controller (RNC) detects the new mobile terminal triggering the mobile terminal identification and registration. The Visited Location Register (VLR) on the visited domain contacts the Home Location Register (HLR) on the Home domain through Mobile Application Part (MAP) protocol for user/costumer credentials exchange.

This process establishes an agreement where the costumer communication capabilities on Visited domains are possible without acquisition of the domain's mobile terminal SIM Card. Today it is not possible for this process to be established during an active call session. The mobile terminal will lose connectivity to the Home domain, disrupting all sessions without the possibility to resume them. The same limitation applies in case the mobile terminal roams from a Visited domain to another.

Further related background technology is described in US 2009/0207808, or in "Digital cellular telecommunications systems (Phase 2+): Functions related to Mobile Station (MS) in idle mode and group receive mode (GSM 03.22 version 7.3.0 Release 1998)": 10-14 January 2000 ETSI TS 100930 V7.3.0 (1999-12).

### Summary of the Invention

The object of the invention is to provide methods of enabling seamless 3G inter-domain handover of mobile terminals being registered in a first domain when entering a second domain. This object is achieved with the features of the claims.

According to a first aspect, the invention provides a method enabling seamless 3G inter-domain handover of mobile terminals being registered in a first, Home domain and being registered in a second, Visited domain when entering a third, New-Visited domain. In this scenario, the mobile terminal is registered and authenticated in the Visited domain and moves in direction of the Visited domain borders into the coverage of a New-Visited domain.

Thus, the mobile terminal enters a new radio coverage area from a new provider, and then progressively losses the radio signal from the Visited domain. The mobile terminal then checks if the new domain is present in the list of preferred PLMN. This PLMN Selector is presented on the SIM card of the mobile terminal.

In case the new domain is present in the list of preferred PLMN, the mobile terminal triggers authentication with the New-Visited domain towards the Home domain by using a specified control message of the UMTS SIM Application Toolkit (see [3]) from the mobile terminal to the Home GMSC. Preferably, the control message is sent through SMS and is thus tunnelled vis-à-vis the visiting domain because it is hidden from the visiting domain.

The Home domain then performs the authentication with the New-Visited domain. The New-Visited domain validates Service Level Agreement (SLA) with Home domain. Furthermore, the New-Visited domain's Visited Location Register (VLR) receives user information about the mobile terminal from the Home Location Register (HLR). The New-Visited domain informs Home domain (HLR) about the successful registration and authentications, and the Home domain informs the mobile terminal about the successful registration and authentication. Preferably, the Home domain uses a specified control message of the UMTS SIM Application Toolkit (see [3]). Again, the control message is sent through SMS and is thus tunnelled because it is hidden from the visiting domain.

At that stage, the mobile terminal is registered and authenticated in all three domains, Home, Visited, and New-Visited domain.

When the mobile terminal Visited domain radio signal becomes low (i.e., below an internal threshold, which is defined by the Home domain operator and is not known by the Visited and New-Visited domain operator), the mobile terminal triggers a Mobile Initiative Network Assist Hand-Over (MINAHO).

At that stage, the Home domain operator negotiates resource allocation with the New-Visited domain. The New-Visited operator allocates the needed resources, if there are resources available. The resource negotiation is not part of the registration and authentication, since at that point in time the hand-over is not decided.

The mobile terminal triggers the hand-over, and the Home domain informs the VLR at Visited domain that the voice call is terminated. The voice traffic is then re-routed from the Home Gateway Mobile Switching Centre (GMSC) to the New-Visited GMSC towards and from the mobile terminal. Thus, the status is reached that the mobile terminal is registered, authenticated, and receives the voice traffic through the New-Visited domain by passing the Home domain GMSC. The Visited domain GMSC is not anymore involved. However, if either the registration or the resource negotiation fails, the mobile terminal will terminate the voice call when the Visited domain radio signal is too low.

The mobile terminal uses the Non Access Stratum Signalling Protocol (NAS-Sig) for communication with the HLR and VLR including Connection Call Protocol (CM) for call setup and Mobility Management (MM) protocol for wireless environment administration and handover signalling. The MSC, HLR and VLR use the Mobile Application Part (MAP) protocol for signalling communication. Furthermore, the specified control messages of the UMTS SIM Application Toolkit are sent through SMS with a special SMS address between mobile terminal and GMSC. The messages are adapted from MAP. This requires a SIM card with UMTS SIM Application Toolkit capabilities on the mobile terminal and special software on the GMSC for filtering of the control messages which was sent to the special SMS address. Alternatively, a special server is installed in the Home domain for interpretation of the control messages and to control the GMSC. The ISDN User Part (ISUP) protocol is used for control communication between the MSC and GMSC for call setup.

According to this method, the inter-connection between the Home GMSC and New-Visited GMSC is known, since the both operators, Home and New-Visited operator, have established a SLA. The inter-connection between the New-Visited domain GMSC and the mobile terminal in the New-Visited domain are handled by the New-Visited domain routing implementation.

According to a second aspect, the invention provides a method enabling seamless 3G inter-domain handover of mobile terminals being registered in a first, Home domain and being registered in a second, Visited domain when re-entering its Home domain. The initial status is that the mobile terminal is registered and authenticated in the Visited domain and moves in direction of the Visited domain borders into the coverage of a Home domain. Thus, the mobile terminal enters a new radio coverage area from its Home domain provider, and the mobile terminal progressively losses the radio signal from the Visited domain.

According to this method, the mobile terminal identifies its Home domain. Furthermore, the mobile terminal informs the Home domain that it will leave the Visited domain by using a specified control message of the UMTS SIM Application Toolkit (see [3]). The control message is sent through SMS and is thus tunnelled because it is hidden from the visiting domain.

In the next step, the Home domain informs the mobile terminal about the possibility to enter Home domain through the voice communication as a tunnel for control messages, since the needed resources are available.

At that stage the mobile terminal is still registered and authenticated in both domains, Home and Visited domain.

The mobile terminal Visited domain radio signal becomes low (i.e. below an internal threshold, which is defined by the Home domain operator and is not known by the Visited domain operator) and the mobile terminal triggers a Mobile Initiative Network Assist Hand-Over (MINAHO).

The Home domain then informs the Visited domain that the voice call is terminated, through MAP protocol for inter-domain signalling. Finally, voice traffic is re-routed from the Home Gateway Mobile Switching Centre (GMSC) in to the Home domain towards and from the mobile terminal. Thus, the mobile terminal is registered, authenticated, and receives the voice traffic through the Home domain.

In the case that there are no resources available in the Home domain, the mobile terminal will terminate the voice call when the Visited domain radio signal is too low.

For the signalling information exchange, the mobile terminal uses the Non Access Stratum Signalling Protocol (NAS-Sig) for communication with the HLR. Furthermore, the new specified control messages of the UMTS SIM Application Toolkit are sent through SMS with a special SMS address between mobile terminal and GMSC. The messages are adapted from MAP. This requires a SIM card with UMTS SIM Application Toolkit capabilities on the mobile terminal and special software on the GMSC for filtering of the control messages which was sent to the special SMS address. Alternatively, a special server is installed in the Home domain for interpretation of the control messages and to control the GMSC. The inter-connection between the Home domain GMSC and the mobile terminal in the Home domain is handled by the - Home domain routing implementation.

The present invention provides a method for seamless mobile terminal mobility across different domains with active sessions expanding session handovers to the inter-domain plane. The present invention address the scenario whereby the mobile terminal handovers from a Visited domain to a New-Visited domain and the scenario when a mobile terminal roams back from a Visited domain to a Home domain. Today's communication roaming system will be greatly enhanced to perform inter-domain handover within active session.

Other aspects, features, and advantages will be apparent from the summary above, as well as from the description that follows, including the figures and the claims.
- Fig. 1: shows a schematic overview of the 3GPP Release 99 Architecture;
- Fig. 2: shows a Home domain to Visited domain hand-over and its signaling and voice re-route;
- Fig. 3: shows an embodiment of the invention, a Visited domain to New-Visited domain hand-over and its signalling; and
- Fig. 4: shows another embodiment of the invention, a Visited domain to Home domain hand-over and its signalling.

Fig. 2 shows an example how a seamless Home domain to Visited domain hand-over is performed.

Fig. 2 shows a Home domain with a Node B connected to a RNC of the Home domain, and a mobile terminal is shown as being located within the coverage of the Home domain. The mobile terminal reaching the border of coverage, shown by reference numeral 101, progressively losses the radio signal from the Home domain. As described above, the mobile terminal checks with its SIM card if the new domain is present in the list of preferred PLMN. After having triggered authentication with the Visited domain through Home domain, and having validated the SLA with the Home domain, the VLR of the Visited domain receives user information from the Home Location Register (HLR). This is shown in Fig. 2 with numeral 102.

The Visited domain informs the HLR about the successful registration and authentication; see numeral 103. Reference numeral 104 shows that the Home domain operator negotiates resource allocation with the Visited domain. The mobile terminal triggers the hand-over (105). The process is completed as soon as voice traffic is re-routed from the Home Gateway Mobile Switching Centre (GMSC) to the Visited GMSC towards and from the mobile terminal. This is shown with reference numeral 106.

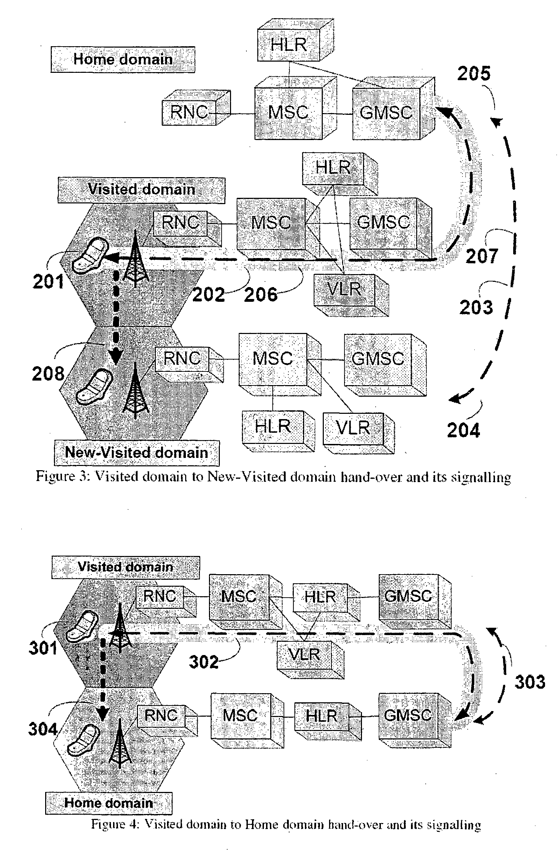

Fig. 3 shows an embodiment of the invention. In this embodiment, the mobile terminal moves from a Visited domain to a New-Visited domain. The hand-over and its signalling is performed as follows.

When the mobile terminal enters the new radio coverage area from a new provider, i.e. a New-Visited domain, the mobile terminal progressively losses the radio signal from the Visited domain; see Fig. at 201. After the mobile terminal has checked whether the New-Visited domain is present in the list of preferred PLMN on its SIM card, authentication with the New-Visited domain towards the Home domain is triggered. This step is shown in Fig. 3 with reference numeral 202. Preferably, the control message to the Home domain is sent through SMS. In Fig. 3 this is visualized as a tunnel because this control message is hidden from the visiting domain.

The Home domain then performs the authentication with the New-Visited domain (see Fig. 3 at 203).

As shown with reference numeral 204, the VLR of the New-Visited domain receives user information about the mobile terminal from the Home Location Register. The New-Visited domain then informs the Home domain (HLR) about the successful registration and authentications. This is shown with arrow 205. The Home domain in the next step informs the mobile terminal about the successful registration and authentication (see Fig. 3 at 206). Again, this message is sent through SMS and is shown as tunnel because it is also hidden from the visiting domain. At this stage the mobile terminal is registered and authenticated in all three domains, Home, Visited, and New-Visited domain.

The home domain operator negotiates resource allocation with the New-Visited domain which is shown at 207. Finally, the hand-over is triggered; see arrow 208.

A further preferred embodiment is shows in Fig. 4. This embodiment relates to a Visited domain to Home domain hand-over and its signalling. This hand-over is similar to the hand-over shown in Fig. 3.

First, the progressive loss of the radio signal from the Visited domain is shown in Fig. 4 at 301. In this scenario, the mobile terminal identifies its Home domain and informs the Home domain that it will leave the Visited domain. Also in this embodiment, the control message is sent through SMS and is thus shown in Fig, 4 as tunnel 302. The Home domain informs the mobile terminal about the possibility to enter Home domain through the voice communication as a tunnel for control messages (see arrow 303 in Fig. 4). The hand-over is triggered at 304.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### List of References (all incorporated herein by reference):

[1] 3GPP TS 21.101, "Technical Specifications and Technical Reports for a UTRAN-based 3GPP system", http://www.3gpp.org/ftp/Specs/html-info/21101.htm.
[2] Sumit Kasera, Nishit Narang, "3G Mobile Networks: Architecture, Protocols and Procedures Based on 3GPP Specifications for UMTS WCDMA Networks", 2005, Book from Tata McGraw-Hill Professional: Networking Series.
[3] 3GPP TS 31.111 V9.2.0 (2010-04); 3rd Generation Partnership Project; Technical Specification Group Core Network and Terminals; Universal Subscriber Identity Module (USIM); Application Toolkit (USAT) (Release 9).

### Abbreviations

- 3GPP: Third Generation Partnership Project
- AAA: Authentication, Authorisation, and Accounting
- AuC: Authentication Centre
- BG: Border Gateway
- EIR: Equipment Identity Register
- GGSN: Gateway GPRS Support Node
- GMSC: Gateway Mobile Switching Centre
- GPRS: General Packet Radio Service
- GSM: Global System for Mobile Communication
- HLR: Home Location Register
- ISDN: Integrated Services Digital Network
- ITU-T: International Telecommunication Union-Telecommunication standardisation sector
- MAP: Mobile Application Part
- MSC: Mobile Switching Centre
- MT: Mobile Terminal
- Node B: Base station
- PDN: Public Date Network
- PLMN: Public Land Mobile Networks
- PSTN: Public Switched Telephone Network
- QoS: Quality of Service
- RNC: Radio Network Controller
- SGSN: Serving GPRS Support Node
- SIM: Subscriber Identity Module
- SLA: Service Level Agreement
- SMS: Short Message Service
- TISPAN: Telecommunications and Internet converged Services
- UE: User Equipment
- UMTS: Universal Mobile Telecommunications System
- USAT: UMTS SIM Application Toolkit
- USIM: Universal Subscriber Identity Module
- UTRAN: UMTS Terrestrial Access Network
- VLR: Visited Location Register

## Claims

1. Method enabling seamless 3G inter-domain handover of mobile terminals being registered in a first, Home domain and being registered in a second, Visited domain when entering (208) a third, New-Visited domain, the method comprising the steps of:
A) determining (201), by the mobile terminal when entering (208) a New-Visited domain, whether the mobile terminal progressively looses the radio signal from the Visited domain;
B) checking, by the mobile terminal, whether the New-Visited domain being entered is present in the list of preferred Public Land Mobile Networks, PLMN;
C) the mobile terminal triggering (202) authentication with the New-Visited domain towards the Home domain of the mobile terminal;
D) the Home domain performing (203) authentication with the New-Visited domain;
E) the New-Visited domain validating a Service Level Agreement, SLA, with the Home domain;
F) receiving (204), at the New-Visited domain, from the Home domain the user information of the mobile terminal;
G) performing registration and authentication at the New-Visited domain, the mobile terminal at that stage being registered and authenticated in all three domains;
H) the third domain informing (205) the first domain about the successful registration and authentication; and
I) the first domain informing (206) the mobile terminal about the successful registration and authentication;
J) the mobile terminal determining whether the second domain radio signal is below an internal threshold, and, in the affirmative, triggering (208) a handover to the third domain; and
K) the first domain operator negotiating (207) resource allocation with the third domain, wherein the operator of the third domain allocates the needed resources,
wherein step C) is performed by using a control message of the UMTS SIM Application Toolkit from the mobile terminal to the Gateway Mobile Switching Centre, GMSC, of the first domain;
wherein step I) is performed by using a control message of the UMTS SIM Application Toolkit from the Gateway Mobile Switching Centre, GMSC, of the first domain to the mobile terminal; and
wherein the control message is sent through SMS and is hidden from the second domain.

2. The method of claim 1, further comprising the steps of:
L) the first domain informing the Visited Location Register, VLR, at the second domain that the voice call is terminated; and
M) re-routing voice traffic from the Gateway Mobile Switching Centre, GMSC, of the first domain to the GMSC of the third domain towards and from the mobile terminal.

3. Method enabling seamless 3G inter-domain handover of mobile terminals being registered in a first, Home domain and being registered in a second, Visited domain when re-entering its Home domain, the method comprising the steps of:
A') determining (301), by the mobile terminal when re-entering the Home domain, whether the mobile terminal progressively losses the radio signal from the Visited domain;
B') identifying, by the mobile terminal, its Home domain being re-entered;
C') the mobile terminal informing the Home domain that it will leave the Visited domain;
D') the Home domain informing (303) the mobile terminal about the possibility to reenter the Home domain, the mobile terminal at that stage being registered and authenticated in both domains; and
E') the mobile terminal determining whether the Visited domain radio signal is below an internal threshold, and, in the affirmative, triggering (304) a handover to the Home domain;
wherein step C') is performed by using a control message of the UMTS SIM Application Toolkit from the mobile terminal to the Gateway Mobile Switching Centre, GMSC, of the Home domain; and
wherein the control message is sent through SMS and is hidden from the Visited domain.

4. The method of claim 3, further comprising the steps of:
F') the Home domain informing the Visited Location Register, VLR, at the Visited domain that the voice call is terminated; and
G') re-routing voice traffic from the Gateway Mobile Switching Centre, GMSC, of the Home domain towards and from the mobile terminal.

## Patentansprüche

1. Verfahren, das eine nahtlose 3G-Interdomänenübergabe von mobilen Endgeräten ermöglicht, die in einer ersten Heimdomäne registriert sind und in einer zweiten besuchten Domäne registriert werden, wenn sie in eine dritte neu besuchte Domäne eintreten (208), wobei das Verfahren folgende Schritte aufweist:
A) Feststellen (201), durch das mobile Endgerät, wenn es in eine neu besuchte Domäne eintritt (208), ob das mobile Endgerät das Funksignal von der besuchten Domäne progressiv verliert,
B) Prüfen, durch das mobile Endgerät, ob die neu besuchte Domäne, in die eingetreten wird, in der Liste bevorzugter öffentlicher Landmobilnetze, PLMN, vorhanden ist,
C) Auslösen (202) einer Authentifizierung mit der neu besuchten Domäne gegenüber der Heimdomäne des mobilen Endgeräts durch das mobile Endgerät,
D) Ausführen (203) einer Authentifizierung mit der neu besuchten Domäne durch die Heimdomäne,
E) Prüfen der Gültigkeit eines Dienstniveau-übereinkommens, SLA mit der Heimdomäne durch die neu besuchte Domäne,
F) Empfangen (204), an der neu besuchten Domäne, der Benutzerinformationen des mobilen Endgeräts von der Heimdomäne,
G) Ausführen einer Registrierung und Authentifizierung an der neu besuchten Domäne, wobei das mobile Endgerät an dieser Stufe in allen drei Domänen registriert und authentifiziert wird,
H) Informieren (205) der ersten Domäne über die erfolgreiche Registrierung und Authentifizierung durch die dritte Domäne und
I) Informieren (206) des mobilen Endgeräts über die erfolgreiche Registrierung und Authentifizierung durch die erste Domäne,
J) Feststellen durch das mobile Endgerät, ob das Funksignal der zweiten Domäne unter einer inneren Schwelle liegt und, falls dies bestätigt wird, Auslösen (208) einer Übergabe an die dritte Domäne und
K) Verhandeln (207) einer Ressourcenzuweisung mit der dritten Domäne durch den Betreiber der ersten Domäne, wobei der Betreiber der dritten Domäne die erforderlichen Ressourcen zuweist,
wobei Schritt C) unter Verwendung einer Steuernachricht des UMTS-SIM-Anwendungs-Toolkits vom mobilen Endgerät zum Gateway-Mobilvermittlungszentrum, GMSC, der ersten Domäne ausgeführt wird,
wobei Schritt I) unter Verwendung einer Steuernachricht des UMTS-SIM-Anwendungs-Toolkits vom Gateway-Mobilvermittlungszentrum, GMSC, der ersten Domäne des mobilen Endgeräts ausgeführt wird und
wobei die Steuernachricht durch SMS gesendet wird und vor der zweiten Domäne verborgen wird.

2. Verfahren nach Anspruch 1, welches ferner folgende Schritte aufweist:
L) Informieren des Besuchter-Ort-Registers, VLR, an der zweiten Domäne, dass der Sprachruf beendet ist, durch die erste Domäne und
M) Umleiten von Sprachverkehr vom Gateway-Mobilvermittlungszentrum, GMSC, der ersten Domäne zum GMSC der dritten Domäne zum und vom mobilen Endgerät.

3. Verfahren, das eine nahtlose 3G-Interdomänenübergabe von mobilen Endgeräten ermöglicht, die in einer ersten Heimdomäne registriert sind und in einer zweiten besuchten Domäne registriert werden, wenn sie wieder in ihre Heimdomäne eintreten, wobei das Verfahren folgende Schritte aufweist:
A') Feststellen (301), durch das mobile Endgerät, wenn es wieder in die Heimdomäne eintritt, ob das mobile Endgerät das Funksignal von der besuchten Domäne progressiv verliert,
B') Identifizieren, durch das mobile Endgerät, seiner Heimdomäne, in die wieder eingetreten wird,
C') Informieren der Heimdomäne durch das mobile Endgerät, dass es die besuchte Domäne verlassen wird,
D') Informieren (303) des mobilen Endgeräts durch die Heimdomäne über die Möglichkeit, dass es wieder in die Heimdomäne eintritt, wobei das mobile Endgerät an dieser Stufe in beiden Domänen registriert und authentifiziert wird, und
E') Feststellen, durch das mobile Endgerät, ob das Funksignal der besuchten Domäne unterhalb einer inneren Schwelle liegt und, falls dies bestätigt wird, Auslösen (304) einer Übergabe zur Heimdomäne,
wobei Schritt C') unter Verwendung einer Steuernachricht des UMTS-SIM-Anwendungs-Toolkits vom mobilen Endgerät zum Gateway-Mobilvermittlungszentrum, GMSC, der Heimdomäne ausgeführt wird und
wobei die Steuernachricht durch SMS gesendet wird und vor der besuchten Domäne verborgen wird.

4. Verfahren nach Anspruch 3, welches ferner folgende Schritte aufweist:
F') Informieren des Besuchter-Ort-Registers, VLR, an der besuchten Domäne, dass der Sprachruf abgeschlossen ist, durch die Heimdomäne und
G') Umleiten von Sprachverkehr vom Gateway-Mobilvermittlungszentrum, GMSC, der Heimdomäne zum und vom mobilen Endgerät.

## Revendications

1. Méthode permettant un transfert sans discontinuité entre domaines 3G de terminaux mobiles étant enregistrés dans un premier, domaine Initial, et étant enregistrés dans un deuxième, domaine Visité, lors de l'entrée (208) dans un troisième, Nouveau domaine Visité, la méthode comprenant les étapes de :
A) détermination (201), par le terminal mobile lors de l'entrée (208) dans un Nouveau domaine Visité, du fait que le terminal mobile perd progressivement le signal radio du domaine Visité ;
B) vérification, par le terminal mobile, du fait que le Nouveau domaine Visité dans lequel il entre est présent dans la liste des Réseaux Mobiles Terrestres Publics, PLMN, préférés ;
C) déclenchement (202), par le terminal mobile, d'une authentification avec le Nouveau domaine Visité vers le domaine Initial du terminal mobile ;
D) authentification (203) par le domaine Initial avec le Nouveau domaine Visité ;
E) validation par le Nouveau domaine Visité d'un Accord de Niveau de Service (Service Level Agreement, SLA), avec le domaine Initial;
F) réception (204), au Nouveau domaine Visité, de la part du domaine Initial, de l'information utilisateur du terminal mobile ;
G) enregistrement et authentification au le Nouveau domaine Visité, le terminal mobile étant à ce stade enregistré et authentifié dans tous les trois domaines ;
H) information (205) par le troisième domaine au premier domaine au sujet des enregistrement et authentification réussis ; et
I) information (206) par le premier domaine au terminal mobile au sujet des enregistrement et authentification réussis ;
J) détermination, par le terminal mobile, du fait que le signal radio du deuxième domaine est en-dessous d'un seuil interne, et dans ce cas, déclenchement (208) d'un transfert vers le troisième domaine ; et
K) négociation (207) par l'opérateur du premier domaine, d'allocation de ressources avec le troisième domaine, dans lequel l'opérateur du troisième domaine alloue les ressources nécessaires,
dans laquelle l'étape C) est effectuée en utilisant un message de contrôle du SIM Application Toolkit (Boite à Outils de l'Application SIM) de l'UMTS (Universal Mobile Telecommunications System, Système Universel de Télécommunications Mobiles) au départ du terminal mobile vers le GMSC (Gateway Mobile Switching Centre, Centre de Commutation Mobile de Transit) du premier domaine ;
dans laquelle l'étape I) est effectuée en utilisant un message de contrôle du SIM Application Toolkit (Boite à Outils de l'Application SIM) de l'UMTS (Universal Mobile Telecommunications System, Système Universel de Télécommunications Mobiles) du GMSC (Gateway Mobile Switching Centre, Centre de Commutation Mobile de Transit) du premier domaine vers le terminal mobile ; et
dans laquelle le message de contrôle est envoyé via SMS et est caché du deuxième domaine.

2. Méthode selon la revendication 1, comprenant de plus les étapes de:
L) information par le premier domaine au VLR (Visited Location Register, Registre de l'Emplacement Visité) au deuxième domaine que l'appel vocal est terminé ; et
M) réacheminement du trafic vocal du GMSC (Gateway Mobile Switching Centre, Centre de Commutation Mobile de Transit) du premier domaine vers le GMSC du troisième domaine vers le et à partir du terminal mobile.

3. Méthode permettant un transfert sans discontinuité entre domaines 3G de terminaux mobiles étant enregistrés dans un premier, domaine Initial, et étant enregistrés dans un deuxième, domaine Visité, lors de la rentrée dans leur domaine Initial, la méthode comprenant les étapes de:
A') détermination (301), par le terminal mobile lors de la rentrée dans le domaine Initial, du fait que le terminal mobile perd progressivement le signal radio du domaine Visité ;
B') identification, par le terminal mobile, de son domaine Initial dans lequel il rentre ;
C') information par le terminal mobile au domaine Initial que le terminal mobile va quitter le domaine Visité ;
D') information (303) par le domaine Initial au terminal mobile au sujet de la possibilité de rentrer dans le domaine Initial, le terminal mobile à ce stade étant enregistré et authentifié dans les deux domaines ; et
E') détermination, par le terminal mobile, du fait que le signal radio du domaine Visité est en-dessous d'un seuil interne, et, dans ce cas, déclenchement (304) d'un transfert vers le domaine Initial ;
dans laquelle l'étape C') est effectuée en utilisant un message de contrôle du SIM Application Toolkit (Boite à Outils de l'Application SIM) de l'UMTS (Universal Mobile Telecommunications System, Système Universel de Télécommunications Mobiles) au départ du terminal mobile vers le GMSC (Gateway Mobile Switching Centre, Centre de Commutation Mobile de Transit) du domaine Initial ; et
dans laquelle le message de contrôle est envoyé via SMS et est caché du domaine visité.

4. Méthode selon la revendication 3, comprenant de plus les étapes de:
F') information par le domaine Initial au VLR (Visited Location Register, Registre de l'Emplacement Visité) au domaine Visité que l'appel vocal est terminé ; et
G') réacheminement du trafic vocal du GMSC (Gateway Mobile Switching Centre, Centre de Commutation Mobile de Transit) du domaine Initial vers le et à partir du terminal mobile.
